# EUROPEAN PATENT APPLICATION

(11) **EP 3 957 471 A1**
(43) Date of publication of application: **23.02.2022**
(21) Application number: 20382758.9
(22) Date of filing: 19.08.2020
(51) Int. Cl.: B29D 99/00, B33Y 80/00

(54) **FILLERS MANUFACTURED WITH ADDITIVE MANUFACTURING**

(71) Applicant: Airbus Operations, S.L.U., 28906 Getafe (Madrid) (ES)
(72) Inventor: HERNÁIZ LÓPEZ, Guillermo, E-28906 Getafe, Madrid (ES); MÍGUEZ CHARINES, Yolanda, E-28906 Getafe, Madrid (ES); PINILLOS MARTÍNEZ, Ricardo, E-28906 Getafe, Madrid (ES); HERNÁNDEZ SOTO, Roberto, E-28906 Getafe, Madrid (ES); MAZARRO BODEGA, Alberto, E-28906 Getafe, Madrid (ES); RODRÍGUEZ ALONSO, Andrea, E-28906 Getafe, Madrid (ES)
(74) Representative: ABG Intellectual Property Law, S.L.

(57) **Abstract**

The present application provides a filler (1, 6) manufactured by using Additive Manufacturing technology and dimensionally adapted to occupy an elongated recess (4) or void formed by a first (2) and second (3) laminate each formed by at least one ply; and wherein the filler (1, 6) comprises at least one hollow space throughout its longer length. More particularly, the application is for the manufacturing of composite parts as these lightweight printed fillers (6) can structurally withstand the geometry of any void or recess (4) being defined by curable laminates at any step of such manufacturing.

## Description

### TECHNICAL FIELD OF THE INVENTION

The present invention belongs to the field of manufacturing, in particular to the field of manufacturing fillers for composite parts using Additive Manufacturing technology.

The invention is of special application in the manufacturing of composite parts as these lightweight printed fillers can structurally withstand the geometry of any void or recess being defined by curable laminates at any step of such manufacturing.

In advantageous embodiments, the printed fillers benefit from the versatile AM manufacturing process to recycle scrapped materials recovered from other composite manufacturing-related process.

### BACKGROUND OF THE INVENTION

In the manufacturing of composite parts, it is common to use multiple stacked plies each with reinforcement fibres impregnated within a resin matrix, such as in the form of 'pre-preg'. These stacks of 'pre-preg' plies are commonly known as laminates and the final number of plies shall depend on the final application, i.e. the actual composite part to manufacture.

These laminates may be pre-formed into particular shapes and then brought together to conform complex shapes according to the composite part. In most cases, when pre-preg plies are laid-up in a flat manner, they are deposited in the same manufacturing step as the moving out and in of the laying machine (e.g. fibre placement or automatic laying-up machine) loses references and deposition conditions and thus may result in poor quality composite parts.

Therefore, if these laminates touch each other, they may partially contact (not extensively) but will finally divert at some point to define a foot or protrusion according to the intended shape. Further, these diverting points or bending points cannot be acute but with a proper curvature radius since the plies of the laminates may skid if excessively bent (i.e. bending causes a progressive sliding of the plies creating compression on the internal plies and tension on the external ones). As a result, elongated recesses or voids are formed between the laminates that need to be filled-in with fillers made of the same composite material to assure the continuity in the properties of the final composite part.

For instance, in aeronautics, structural components that may rest on the inside part of the skin of an aircraft for preventing the same from buckling or bending under compression or shear loads are typically manufactured by this technique. Examples of such structural components are 'T-profile', 'I-profile', 'J-profile' or `Ω-profile' ('omega') stringers as well as 'C-shape' or 'H-shape' frames, beams, ribs or longerons that follow the aeroshape of the aircraft. Any of these composite parts transfer aerodynamic loads acting on the skin onto other supporting structures and thus shall perfectly contact at least at one end, i.e. the foot, the skin or any other base laminate.

By profile it should be understood the cross-section geometry of such composite part.

Typically, to manufacture a T-profile composite part, each 'L-shape' halve is manufactured separately. The main steps are as follows:
Firstly, a number of composite plies (i.e. pre-preg) are laid-up one upon another in a flat manner, thus resulting in a stack of plies. The surface of each stack of plies approximates to the developable surface of the 'L-shape' halve.

If necessary, these flat stacks of plies may be trimmed to the desire shape. The resulting planar laminate (trimmed or not) is also known as a composite pre-form.

Secondly, each one of these planar laminates corresponding to a single 'L-shape' halve is bended by a folding line between the web and the foot in order to form-up an 'L-profile'. Typical forming-up technologies for this process are hot forming and press-forming; wherein hot-forming uses a membrane and heat, whilst the press-forming uses a press and force.

Finally, in short, both 'L-profiles' are positioned and put together making their respective webs contact symmetrically for achieving the desired 'T-profile'. In addition, in some cases, a second forming operation is needed to finally adapt the 'T-profile' composite part obtained by joining both halves to the final shape of curing tools (e.g. the L-shaped caul plates).

In order to cure the uncured laminates, the formed 'T-profile' is subjected to a final co-curing cycle. Alternatively, both 'L-profiles' may be cured separately, and afterwards adhesively bonded together.

More particularly, in order to cure the uncured laminates, the formed 'T-profile' is subjected to a final co-curing cycle or it can be co-bonded to an uncured base laminate (for the aircraft skin) or it can be cured separately from the base laminate and bonded (i.e. secondary bonding) to a cured base laminate afterwards.

Either way, the diverting point where the two 'L-profile' foots divert from each other leaves a gap that may cause the collapsing during the curing process. Therefore, a roving is typically placed between the T-profile composite part foot for filling this gap, which also permits to get a uniform and planar surface over the foot to contact extensively with the skin of the aircraft.

A cured roving may be placed between the T-profile composite part foot and bonded thereto. Alternatively, both uncured roving and T-profile composite part can be co-cured together.

Thus, a roving (also known as "rowing") is a composite filler manufactured to dimensionally adapt and fill-in the space between both feet. A composite 'roving' is normally understood as a bundle of fibres which may be unidirectional and unspun or otherwise shaped into patterns to provide structural continuity and void avoidance. Or, in other words, the roving serves as a kind of holding or supporting tooling to overcome any geometrical distortion at the edges where laminates divert during the curing process since high temperature may promote softening or undesired ply movement which shall cause structural defects on the stringer and, in the end, render a poor or unbalanced load transference.

Also, some defects may be found at the interface between the roving (or any composite filler) and the laminates after curing as the roving softens when subjected to high temperatures and may inter-infuse resin with the laminates, thus entailing a grooved interface o non-uniform roving contour. The roving peaks have been experimentally found the worst area inducing abrupt transitions on the adjacent laminate plies.

Further, this roving is manufactured independently, being afterward placed on such diverting point of both halves of the 'T-profile' composite part or stringer. There are various ways for manufacturing a roving, wherein the most typical ones are summarized below:
1. Laying-up a set of plies in a stacked manner; cutting that set of plies in a triangular shape; and directly placing the filler in a recess of the T-profile without any other forming step;
2. Laying-up several 0° plies in a stacked manner; cutting that set of plies in rectangular solids; placing these rectangular solids in a 'V-shaped' forming tool; and curing the V-shaped filler by applying pressure (i.e. vacuum) and heat (not mandatory);
3. Laying-up and rolling-up just one 0° ply with the needed dimensions to achieve the volume to be filled up to form a rolled cylinder; placing the rolled cylinder in a 'V-shaped' forming tool; and curing the V-shaped filler by applying pressure (i.e. vacuum) and heat (not mandatory);
4. By pultrusion.

This process is time-consuming and leads to an anisotropic product since the rolled layers are not perfectly cylindrical but adapt by compression to the desired shape giving rise to undesired ply sliding.

According to the high number of stringers in an aircraft, these composite rovings should be manufactured at high rates to meet the demand, i.e. being standardized.

As the person skilled in the art will recognize, these defects mostly promoted by an undesired sliding of the laminate plies or the distortion of the rolled layers forming the filler may occur not only in stringers and rovings but in any other filler for any composite part formed by diverting laminates.

Thus, there is a need in the related industry for a process that eliminates or at least mitigates these defects in order to improve the structural behaviour and dimensional stability of the composite parts. There is also a need in the aeronautical industry for reducing the weight, in order to reduce fuel consumption.

### SUMMARY OF THE INVENTION

The present invention provides a solution for the aforementioned problems, by a filler manufactured by using Additive Manufacturing technology according to claim 1, a method for manufacturing a composite part according to claim 9, a T-profile composite part according to claim 14, and a method for manufacturing at least a portion of an aircraft skin according to claim 15. In dependent claims, preferred embodiments of the invention are defined.

In a first inventive aspect, the invention provides a filler manufactured by using Additive Manufacturing technology and dimensionally adapted to occupy an elongated recess or void formed by a first and second laminate each formed by at least one ply; and wherein the filler comprises at least one inner hollow space throughout its longer length.

Throughout this entire document, "Additive Manufacturing technologies" (AM) will be understood as those technologies that build 3D objects by successive addition of material, such as adding material in a layer-upon-layer fashion, where the material (either meltable material or matrix material in the case of reinforced materials) changes to a liquid upon the application of heat and solidifies (or hardens) to a solid when cooled.

Typically, before printing, the digital CAD sketch of the 3D filler is digitally sliced into multiple horizontal sections or layers, or the material hardening or sintering planned. The printer controller then uses this generated slicing or planned sintering to manufacture the filler sequentially, for instance with one layer at a time (i.e. layer-by-layer), with each layer adhering or bonding to the previous one.

Many technologies are encompassed within Additive Manufacturing technologies, depending on the form of the material and machine technology used. Among others, it may be pointed out the *Selective Laser Sintering* (SLS), *Stereolithography* (SLA), *Multi-Jet Modelling* (MJM), or *Fused Filament Fabrication* (FFF). In an embodiment, the filler is manufactured using Additive Manufacturing technologies such as *Selective Laser Sintering* (SLS) or *Fused Filament Fabrication* (FFF). Preferably, the filler is manufactured layer-upon-layer using Additive Manufacturing technologies such as *Fused Filament Fabrication* (FFF).

The *Fused Filament Fabrication* (FFF) is a process oriented fabrication which involves the use of materials in the form of filaments injected through at least one indexing nozzle onto a build sheet. The nozzle(s) trace(s) the surface pattern for each particular layer with the material hardening prior to the deposition of the next layer. The process repeats until the object is completed, i.e. is printed.

In a preferred embodiment, the filler is printed using *Fused Filament Fabrication* (FFF). In FFF, each deposited layer is formed by a set of oriented filaments. As known, FFF is a particular example of *3D-Printing* (3DP).

As derived from the notions of prior art composite fillers, they should have similar dimensions as the elongated recess or void formed by first and second laminate at their separation or diverting point. In this way, the filler is adapted to occupy such a formerly empty space and acts as a holding or support tooling during the subsequent curing of the laminates thus maintaining their positions and dimensions.

First, as the fillers can be modelled by a 3D modelling software (Computer Aided Design or CAD), the CAD sketch (i.e. the 3D electronic model) can be dimensionally closer to the final space intended to be occupied. Also, because the printed parts have little deviation with respect to the 3D sketch, the resulting printed filler is proximate to the original space and better fits therein.

Besides, the advantage of printing the fillers by successive addition of material reduces the buy-to-fly ratio, i.e. the ratio between mass of material that is required to produce a part and the mass of material in the finished aeronautical structure.

In addition, for those non-conventional parts, i.e. those parts susceptible to deviations and therefore whose fillers need to be designed ad-hoc, the invention further benefits from the rapid prototyping allowed by the AM techniques.

Thus, it is clear that this filler can better adapt to the curvature radius of the laminates without the need to be slightly compacted as prior art did, also allowing to reach remote ends providing a rigid and continuous support for the entire curvature of the laminates. In other words, the filler does not need to mutually conform (by slight compaction) with the laminates to perfectly fit in the void or recess, but it is designed and manufactured with a suitable shape from the beginning.

Further, it is to be noted that the filler distinguishes from other manufacturing tooling in that once positioned, it becomes permanent, that is, is not intended to be removed afterwards.

In an embodiment, the filler is printed, especially if manufactured with FFF techniques, with a meltable material, such as polymeric material. Preferably, the melting point of such polymeric material is above the maximum temperature to which the laminates will be subjected to (e.g. curing) in order not to excessively soften the deposited filaments but slightly enable shaping. More preferably, the glass transition temperature of the polymeric material is equal to or above the maximum temperature to which the laminates will be subjected to.

In any case, it is good enough if the meltable material is stable at the composite material stabilization temperature, e.g., carbon-fibre-epoxy laminates M21E/IMA stabilization temperature is 135°C, so the meltable material melting point should be above 135°C. Thus, in a preferred embodiment, the meltable material melting point is equal to or above 135°C.

That is, the temperature at which the filler is to be subjected should be acceptable in order to maintain its geometry and shape during laminates processing without collapsing.

It is to be noted that this operating temperature and, thus, the selected polymeric material depends on the process to fix the laminates on that position, i.e. whether the fresh laminates are subjected to a co-curing process or a co-bonding one when the filler is already positioned.

For instance, typical values of glass transition temperature are approx. 143 °C for PEEK (Polyetherketoneketone), 50°C for PA66 (e.g. nylon), and 105°C for ABS (Acrylonitrile butadiene styrene). Although the precise value of glass transition temperature depends on the measuring technique, all the known results provide values similar enough as to apply the present invention.

In a particular embodiment, still in fabrication by AM techniques, the filler is cooled down at a predefined cooling speed. Preferably, this cooling speed is selected for such part to achieve a degree of crystallization of at least 32%.

In connection with the design and manufacturing versatility of AM techniques, the filler according to the invention is manufactured with at least one hollow space throughout its longer length. In other words, since this filler made of meltable material, such as polymeric material, it can withstand any incoming pressure derived from the tightening of the laminates or any further process such as laminate softening without distorting, there is no need of being integral or solid. Instead, the filler can dispense with the inner rolled-up that may cause internal wrinkles and deformation between layers during these tightening and, in lieu, have a space (i.e. empty, free of material) usable, for instance, to channelize wiring or housing sensors for monitoring the composite part.

These hollow spaces may be either a through-hole extending the entire length or disparate hollow spaces intercalated with separating walls.

In an embodiment, the filler is a roving for a stringer.

In a preferred embodiment, the filler is a roving, preferably for a T-profile composite part, this filler having a substantially triangular outer cross-sectional shape.

Thus, alike other roving that fills the stringer diverting point, it has a substantially triangular outer cross-sectional shape adapted to further contact a base laminate which shall form the skin of the aircraft. In other words, at least one of the faces of the filler is substantially flat.

Therefore, it should be understood that the outer face of the roving (i.e. the exposed face in relation to the stringer *per se*) is substantially flat as it is intended to contact and be bonded with the base laminate.

In an alternative embodiment, the filler is a roving for a 'J-profile', or 'Ω-profile' ('omega'), or 'L-profile', or 'Z-profile' composite part, this filler having a substantially right triangular outer cross-sectional shape. In these composite parts, the first laminate forms the desired profile whereas the second laminate forms the base laminate for the skin of the aircraft.

The current production times of AM machines timely couple with current lead times of T-profile stringers thus making this invention especially suitable for the manufacturing of such aeronautical stiffeners.

In addition, the weight saving of using e.g. thermoplastic polymers as in FFF techniques instead of rolled composites as well as the fact of being hollow may have an impact of around 7kg weight reduction per wing in modern commercial aircraft.

More particularly, as explained, rovings for T-profile stringers have a substantially triangular outer cross-sectional shape, with two faces contacting the curvature radius of each half with L-profile, and the third face intended to contact the base laminate representing the following skin of the aircraft.

Therefore, in an embodiment, the filler comprises three faces according to the triangular outer cross-sectional shape, wherein a first face is substantially flat, and the other two faces have a substantially concave shape along the longer length.

Such a substantially flat face is for the base laminate and the remainder two are for holding the curvature radius of each half with L-profile. Therefore, these latter faces have a concave shape which is complementary with the radius of curvature of the laminates.

In an embodiment, the filler comprises a non-constant outer cross-sectional profile with a progression of radius of curvature along the faces with the concave shape, the radius of curvature at one end of the filler according to the longer length being greater than at the opposite end.

That is, since the stringers are adapted to follow the skin geometry which is non-uniform, in use, those stringers may progressively curve reproducing such skin aero-shape. Also, as the structural needs of the fuselage or skin (or any other part of the aircraft where stringers are placed) are not uniform either, the stiffening capacity of the stringers should be also variable. Thus, the T-profile dimension of the stringer varies along its length either extending the web, increasing the number of plies, or increasing the foot area contacting the base laminate.

In a different scale, the roving shall also adapt to this change in the radius of curvature of the laminates (e.g. the formed L-profiles) and, accordingly, in this embodiment it comprises a non-constant outer cross-sectional profile with the mentioned progression in the radius of curvature (i.e. concave shape) along its faces.

In a preferred embodiment, the radius of curvature at one end is between 4 and 25mm, preferably being 5.8mm; while at the opposite end is also between 4 to 25mm, preferably 7.6mm.

Values closer to 4mm relate to the minimum radius of curvature used for HTPs (i.e. Horizontal Tail Plane), while those values closer to 25mm are related to the ribs of the torsion box.

In an embodiment, the at least one hollow space is an inner through-hole.

Advantageously, having a through-hole stresses any weight saving as well as permits to safely distribute and house (thus protecting it against collisions or vibrations) electrical wiring from end to end of the stringers, which usually extend along a considerable distance across the fuselage or wing. Thus, former auxiliary holding equipment for wiring is no longer needed, avoiding their weight increase. Likewise, other connecting elements such as optic fibre or sensors may be housed therein.

In an embodiment, the at least one hollow space is an inner through-hole comprising a cross-sectional shape substantially homologous to the outer cross-sectional shape of the filler.

Advantageously, this provides an easy CAD design since all the walls have a similar thickness and, thus, are formed by the same number of contiguous filaments.

In an embodiment, the at least one hollow space is an inner through-hole comprising a substantially circular cross-sectional shape.

This embodiment is especially advantageously for housing cables, wiring, optic fibre or any other tubular connection element susceptible for its dimensions to be inserted though the composite part.

Thus, in a particular embodiment, the filler further comprises a tubular connection element such as a cable, and/or wiring, and/or optic fibre within the inner through-hole.

In an embodiment, the filler comprises at least a wall resulting at least one hollow space in a blind hole.

Preferably, this hollow space(s) is arranged elongated along the longer length of the filler and causes the filler to be lightweight. Therefore, the filler comprises elongated inner cavities to reduce weight while the splitting walls between cavities provide local reinforcements to avoid buckling of the filler surfaces caused by heat or pressure from the tightened laminates.

This embodiment is of especial application where there is no intention to deploy cables through the composite part or stringer. Thus, the wall may be positioned either within the filler (if more than one, preferably homogeneously distributed) or at an end, or both.

In this way, the ends can be plugged *in situ* by also printing walls at the ends which prevent the hollow spaces from dust accumulation which may inadvertently increase weight.

Otherwise, the filler may be printed with a trough-hole and afterwards its ends being sealed properly with a sealant or a plug, if required.

In an embodiment, the filler is made of thermoplastic material, preferably ABS (Acrylonitrile butadiene styrene), PA (Polyamide), PC (Polycarbonate), PPSU (Polyphenyl sulfone), PEI (Polyetherimide), PEEK (Polyether ether ketone), or PEKK (Polyetherketoneketone).

In a preferred embodiment, the filler is made from nylon (PA66), preferably nylon recycled from scrapped vacuum bags. In aeronautics, these vacuum bags cannot be re-usable and are discarded after use. By this embodiment, their raw material can be post-converted into a suitable feeding material for the AM machine, for instance into filaments if FFF technique is used. Then, with this nylon filaments the filler or roving can be printed.

In an embodiment, the filler comprises fibrous material reinforcement embedded within the meltable material.

By depositing fibrous material reinforcement with meltable material, a lightweight design is achieved because less amount of material is needed to meet the structural requirement compared to using solely meltable material.

According to the invention, the fibrous material reinforcement may be in the form of fibrils (very short and/or irregular fibres), nanofibers, carbon fillers, short fibres (length <1mm), or continuous fibres (extended continuously along the whole filament and thus along the whole length/width of the filler when manufactured), for instance. Preferably, the fibrous material reinforcement is in the form of continuous fibres and/or short-fibres, wherein continuous fibres are preferred.

Additionally, the fibrous material reinforcement may be glass, carbon, polymer fibres or any other conventional material used as reinforcement. Among them, carbon is preferred.

In an embodiment, the fibrous material reinforcement is added during the filler fabrication according to a pre-determined topologic design.

For instance, reinforcement concepts may be designed following simulated load paths by complex curves or non-orthogonal directions which are considered difficult to implement with standard composites nowadays due to manufacturing limitations. In this way, isogrid or anisogrid structures or reinforcement concepts may be obtained by topologic optimizations.

In a preferred embodiment, the fibrous material reinforcement is recycled from scrapped dry fibre plies.

Scraps of dry fibre plies are difficult and expensive to process as they cannot be used again for the manufacturing of structural parts and, instead, should be treated and managed according to environmental legislation.

This invention provides a method to exploit scrap fibre recycling which otherwise would be discarded.

In a second inventive aspect, the invention provides a method for manufacturing a composite part by at least a first curable laminate and a second curable laminate, wherein the method comprises the following steps:
- providing the first laminate formed by at least one ply;
- providing the second laminate formed by at least one ply;
- bringing at least such first and second laminates together forming an elongated recess or an elongated void thereby;
- manufacturing by using Additive Manufacturing technology a filler according to any of the embodiments of the first inventive aspect dimensionally adapted to occupy such recess or void; and
- placing such filler before the first and second laminate are brought together for filling the resulting void, or after being brought together for filling the resulting recess in such a way that the filler supports such first and second laminates thus maintaining the original recess or void shape.

As mentioned, manufacturing the filler to be dimensionally adapted to such recess or void is understood as first providing a CAD sketch that fits with the dimensions of such void or recess and, therefore, approximating such manufactured filler to such CAD sketch.

Accordingly, the filler of the present invention is not compacted together with the laminates which might render distortions in all parts. As the filler according to the invention is more rigid than a fresh or semi-cured composite filler, its holding capacity is enhanced and, unlike prior art fillers, no mutual-shaping takes place between the laminates and the filler for get fitting.

In a preferred embodiment, the filler is manufactured using Fused Filament Fabrication technology.

In an embodiment, the first and second laminates are provided in uncured state, and once the filler is placed, the composite part is subjected to a curing cycle for co-curing the at least first and second laminates together. That is, the curable laminate parts are co-cured together, while the filler holds the dimensions of the void or recess.

Alternatively, the first and second laminates can be subjected to the co-curing cycle and, once finished, the filler is placed and adhesively bonded.

In an alternative embodiment, the method further comprises:
- curing separately the first and second laminates;
- adhesively bonding the first and second laminates to each other; and
- bonding the filler to the first and second laminates by adhesive means.

The person skilled in the art should recognize that bonding processes entail less tooling and complexity than a co-curing manufacturing process as care should be taken for a single laminate to maintain its dimensions (e.g. by caul plates) rather than assuring positioning and dimensions of both laminates at the same time.

In a preferred embodiment, the composite part is a T-profile composite part, such as an aeronautical stringer, and the first and second laminates have each a respective L-profile being thus positioned and put together making their respective webs contact symmetrically for achieving the desired 'T-profile'; and wherein the filler is placed along the recess where both L-profiles divert from each other.

In a third inventive aspect, the invention provides a T-profile composite part, such as an aeronautical stringer composite part manufactured according to the method of second inventive aspect, wherein the filler manufactured by using Additive Manufacturing technology is arranged occupying the recess where both L-profiles divert from each other.

In a fourth inventive aspect, the invention provides a method for manufacturing at least a portion of an aircraft skin comprising at least one aeronautical stringer, the method comprising the following steps:
- providing a base laminate for the skin;
- manufacturing at least one aeronautical stringer according to any of the embodiments of the method of second inventive aspect;
- positioning the at least one aeronautical stringer on the base laminate; and
   ∘ if both the base laminate and the at least one aeronautical stringer is uncured, applying a curing cycle for curing them together; or
   ∘ if the base laminate is cured or pre-cured and the at least one aeronautical stringer is uncured, adhesively bonding the base laminate to the uncured aeronautical stringer and applying a curing cycle; or
   ∘ if both the base laminate and the at least one aeronautical stringer are cured or pre-cured, bonding the cured base laminate with the cured aeronautical stringer by adhesive means (i.e. by secondary bonding).

The base laminate is understood as a thin composite structural element that provides the outer surface of the lifting surfaces such as a wing or fuselage section. Typically, a number of composite plies (i.e. pre-preg) or tapes are laid-up one upon the other on a mould shaping such outer surface, thus resulting in a stack of plies.

If the base laminate is provided in an uncured state alike the aeronautical stringer, e.g. T-profile stringer, a co-curing cycle shall be applied for curing them together.

Else, if the base laminate is provided already cured (or pre-cured), there are two possibilities:
1. that the aeronautical stringer be uncured, so the stringer is correctly positioned thereon and a curing cycle is applied for its curing and mutual integration with the base laminate adhesively bonded thereto (this is known as a co-bonding process), or
2. that the aeronautical stringer be already cured, so both parts are adhesively bonded (also known as secondary bonding).

It is to be noted that the adhesive used in the bonding process (either co-bonding or secondary bonding) is typically the same thermoset resin matrix of the plies pre-preg in order to achieve a good structural result. Therefore, as any other thermoset resin, a short curing cycle shall be applied.

Therefore, co-bonding processes used on stiffened lifting surfaces typically entail two curing cycles: a first curing to independently consolidate a first part (either the base laminate or the stringers) which is subsequently adhesively bonded to the still uncured part, and a second curing cycle to complete the mutual integration of the uncured part to the already cured part.

Shortly, 'co-curing' entails curing together two uncured laminates; 'co-bonding' entails the adhesively bonding and curing of a cured laminate and an uncured laminate; and 'secondary bonding' entails the adhesively bonding of two cured laminates.

Therefore, in a preferred embodiment, at least one uncured aeronautical stringer, e.g. 'T-profile' stringer, is placed on a pre-cured base laminate through an adhesive and both are subjected to a curing cycle together. In another embodiment, at least one pre-cured aeronautical stringer is placed on an uncured base laminate through an adhesive and both are subjected to a curing cycle together. In other words, in a preferred embodiment, there is a co-bonding process between the aeronautical stringer and the base laminate.

In a fifth inventive aspect, the invention provides a portion of an aircraft skin comprising at least one aeronautical stringer manufactured according to any of the embodiments of the fourth inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figures 1a, 1b: These figures show (a) a CAD design with filler geometry dependant on laminates curvatures, and (b) a cross-sectional view with the resulting composite filler according to prior art.
- Figure 2: This figure shows an exploded view of a T-profile composite part with both L-profiles together and the roving spaced apart.
- Figures 3a-3d: These figures show exemplary embodiments of a printed filler with different hollow spaces.
- Figures 4a, 4b: These figures show exemplary embodiments of a printed filler with an 'L-profile', and a 'Z-profile' in cross-section.
- Figure 5: This figure shows a composite part according to the invention placed on a base laminate to be cured together.

### DETAILED DESCRIPTION OF THE INVENTION

The invention defines a filler (1) manufactured by using Additive Manufacturing technology and dimensionally adapted to occupy an elongated recess (4) or void formed by a first (2) and second (3) laminate each formed by at least one ply; and wherein the filler comprises at least one inner hollow space (1.1, 1.2) throughout its longer length (L).

As mentioned, among all the Additive Manufacturing technologies, the use of *Fused Filament Fabrication* (FFF) is preferred. Therefore, such a fabrication uses an additive manufacturing tool comprising a printing chamber in turn housing a build sheet and at least one head configured to be moved over said build sheet and to deposit filaments. This additive manufacturing (AM) tool is not shown in the figures.

Typically, an AM tool also comprises spool(s) for storing the filaments, a feeding mechanism to feed them up to the head as required and, further, the head may comprise a heater block for heating the meltable filaments up to any precise temperature allowing their further deposition.

In an embodiment, the head is configured to be moved over the build sheet in the three-translational axes (X, Y, Z) and/or rotations (around X, Y, Z) for printing more complex geometries. Optionally, the head(s) may be limited to move over the build sheet just in horizontal directions (X, Y) while the movement in vertical Z-direction is performed by the build sheet, thus implementing the so-called 2.5D fabrication. These movements are typically performed by actuators and/or servos, one for each direction and/or rotations.

As the person skilled in the art will recognize, aspects of the present invention described herein below may be embodied as a filler (1) manufactured by using Additive Manufacturing technology, as a method for manufacturing a composite part (10), as a T-profile composite part, as a method for manufacturing at least a portion of an aircraft skin (100), or as a portion of an aircraft skin (100) *per se*. The term "aircraft skin" is not restricted to the fuselage skin, but also covers the Horizontal Tail Plane (HTP) or the Vertical Tail Plane (VTP) skins.

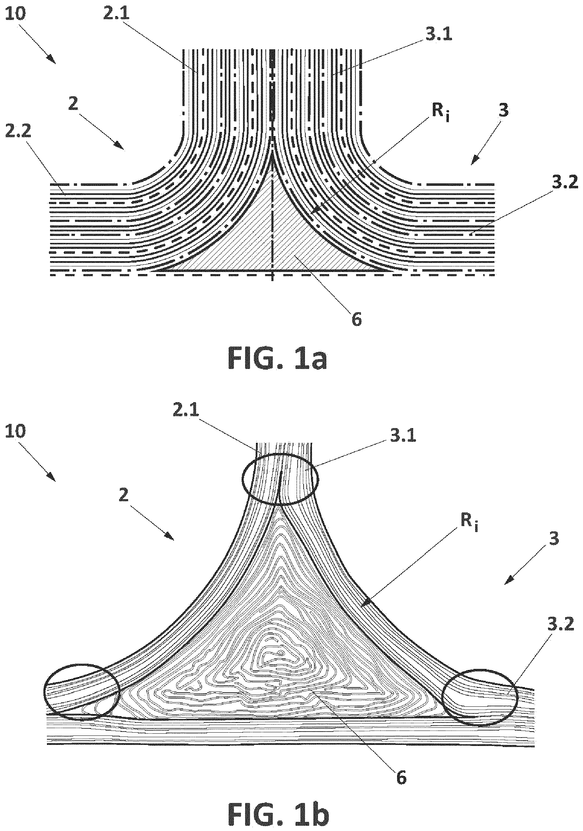

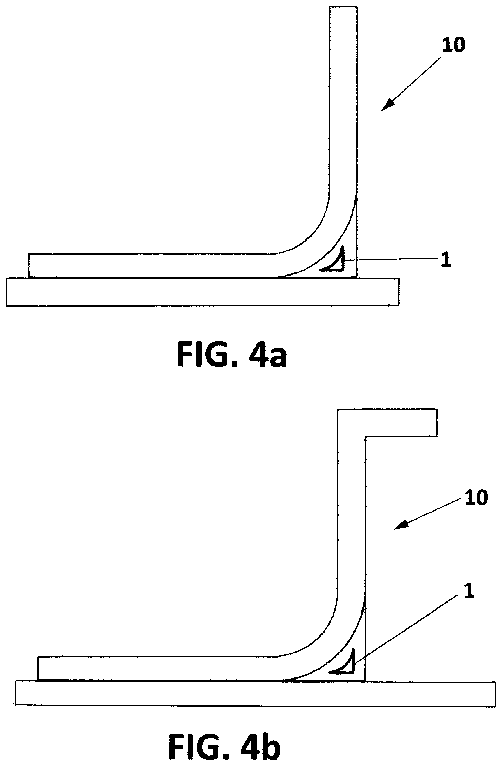

Figure 1a depicts an exemplary theoretical CAD design of a first laminate (2) and a second (3) laminate brought together and forming an elongated recess. Particularly, it is shown the respective bending radius (Rᵢ) of two L-profiles (2, 3) made of pre-preg plies and with their respective webs (2.1, 3.1) contacting symmetrically. As shown, a recess (4) is formed where the two 'L-profile' foots (2.2, 3.2) divert from each other. Peripherally closing this recess (4), a base laminate (5) also formed by stacked pre-preg plies shall be positioned as shown in figure 4.

Providing material continuity, in this CAD simulation, it is positioned a filler (6) dimensionally adapted so as to occupy such a recess (4) between the three laminates (2, 3, 5). It is to be noted that the recess, i.e. empty space, is not shown in figure 1a because of the filler.

As can be seen, as per the symmetrical configuration of the T-profile stringer, both L-profiles (2, 3) have the same bending radius (Rᵢ) at the same point of the stringer length. This bending radius (Rᵢ) may vary along the length of the stringer and, thus, cause the geometry of the filler be variable as well.

According to prior art teachings, aimed to provide material continuity, the filler is also made of composite rolled and formed up to reproduce a substantially similar shape than the recess (or void).

Likewise, if one laminate is laid-up in a substantially flat manner, the second laminate may be deposited thereon with a ridge thus forming a channelled void.

Be the case that it may, this presence of these fillers (6) prevent the laminates (2, 3) from collapsing during any temperature increase such as the subsequent curing process. As fresh pre-preg composite is pliable, in order for the rolled composite filler (6) to perfectly fit in such recess or void, it is formed or slightly compacted between the tightened laminates (2, 3).

Nevertheless, the structural limitations of the composite plies impedes to have high curvature radius and makes impossible the filler to reach remote areas of the recess as shown in figure 1b.

Figure 1b depicts a cross-sectional view of the resulting composite part (10) manufactured according to the CAD design of figure 1a if the filler were a conventional composite filler (6).

First, it can be observed that the rolling-up of the stacked plies of the filler is deformed to reproduce the recess (4) contour, which renders the filler (6) with anisotropic properties even if a 'V-shaped' forming tool is previously used to early conform the filler.

Second, further defects come up during the curing cycle as both the filler (6) and laminates (2, 3) soften promoting inter-deformation resulting in a grooved interface o non-uniform filler contour. As pointed out with circles in figure 1b, the filler peaks have been experimentally found the worst area inducing abrupt transitions on the adjacent laminate plies.

In general, it is produced by an undesired sliding of the laminate plies or distortion of the rolled layers forming the filler.

In figures 1a and 1b the composite filler has been referenced as (6), while henceforth the filler according to the invention will be referenced as (1).

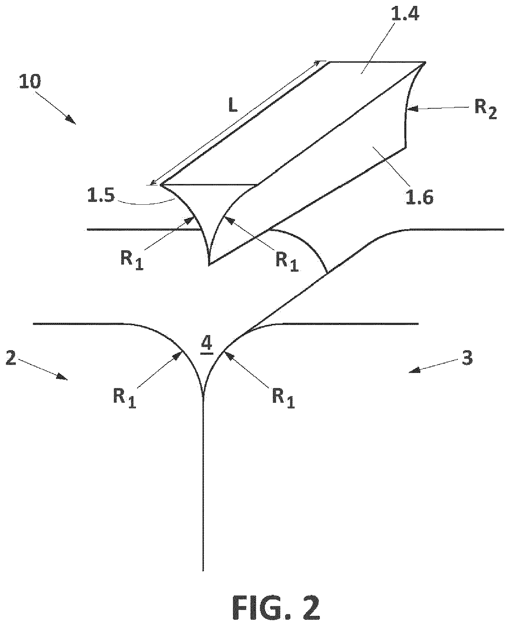

In contrast, figure 2 depicts an exploded view of a T-profile composite part (10) or T-profile stringer, and the kind of filler (1) used with these aeronautical parts, the so-called 'roving'. It is to be noted that 'roving' is a technical term used in aeronautics for referring to fillers (1) for stringers (with any profile). Therefore, the person skilled in the art shall recognize that instead of the T-profile stringer (10) shown in figure 2, other profiles might have been depicted.

Thus, the filler (1) shown herein is a roving for such a T-profile composite part (i.e. the stringer) and, alike other rovings that fill the stringer diverting point, it is adapted to further contact the base laminate (5) as shown in figure 4. In other words, one of the faces (1.4) of the filler (1) is substantially flat.

Therefore, it should be understood the outer face (1.4) of the roving (i.e. the exposed face in relation to the stringer *per se*) is substantially flat as it is intended to contact and be bonded with the base laminate (5).

In particular, rovings have a substantially triangular outer cross-sectional shape. More particularly, the roving comprises three faces (1.4, 1.5, 1.6) according to the triangular outer cross-sectional shape, wherein a first face (1.4) intended to contact the base laminate (5) is substantially flat, and the other two faces (1.5, 1.6) have a substantially concave shape along the longer length.

By default, as stringers are symmetrical, the roving should be symmetrical too, and the concave shapes (R₁, R₂) at both faces (1.5, 1.6) should be equal. In other words, as the bending radius of the laminates (e.g. 'L-profile' halves) (2, 3) are similar at a particular point of their length, the radius of curvature of both concave shapes of the roving (1) should be similar as well, i.e. R₁ substantially equal to R₂.

As stringers (10) may modify their stiffening capacity along their length depending on the actual requirements of the aircraft skin (100), stringers (10) may progressively enlarge or shrink and, accordingly, the radius of curvature at one end of the roving (according to its longer length (L)) can be greater than the radius of curvature at the opposite end (i.e R₂ ≥ R₁), or vice-versa. In this way, the roving (1) comprises a non-constant outer cross-sectional profile.

In a preferred embodiment, the radius of curvature (R₁) at one end is between 4.5 and 7 mm, preferably being 5.8 mm; while the radius of curvature at the opposite end (R₂) is between 6 to 9.1 mm, preferably 7.6 mm. In this exemplary embodiment, the length of the roving (longer dimension, 'L') is 300 mm.

Be that as it may, the radius of curvature (R₁, R₂) at any end may be between 4 and 25 mm depending on whether the filler is designed for the HTP or for the torsion box.

Further, the filler (1) according to the invention is manufactured by AM techniques, and thanks to the design and manufacturing versatility of these manufacturing techniques, the filler (1) can be designed and manufactured with at least one inner hollow space (1.1, 1.2).

As mentioned, this hollow space(s) (1.1, 1.2) is arranged elongated along the longer length (L) of the filler (1) and cause the filler to be lightweight. This hollow space may occupy just a portion of the filler (1.1) or the entire length (1.2) (i.e. as an inner through-hole).

Therefore, the filler may have elongated inner cavities (1.1) to reduce weight while the splitting walls (1.3) between cavities provide local reinforcements to avoid buckling of the filler surfaces (1.5, 1.6) caused by heat or pressure from the tightened laminates (2, 3).

This hollow space may be extended throughout the longer length giving rise to an inner through-hole (1.2) which provides a channel housing for cables, wiring, fibre optic, etc. If this enclosure (1.2) is not expected to be used, i.e. no cables will be deployed therein, the ends may be plugged either *in situ* by also printing walls (1.3) at the ends of the filler or by printing the filler (1) with the trough-hole and afterwards sealing the ends properly with a sealant or a plug.

By having a blind end, the hollow spaces (1.1) are prevented from dust accumulation which may inadvertently increase weight.

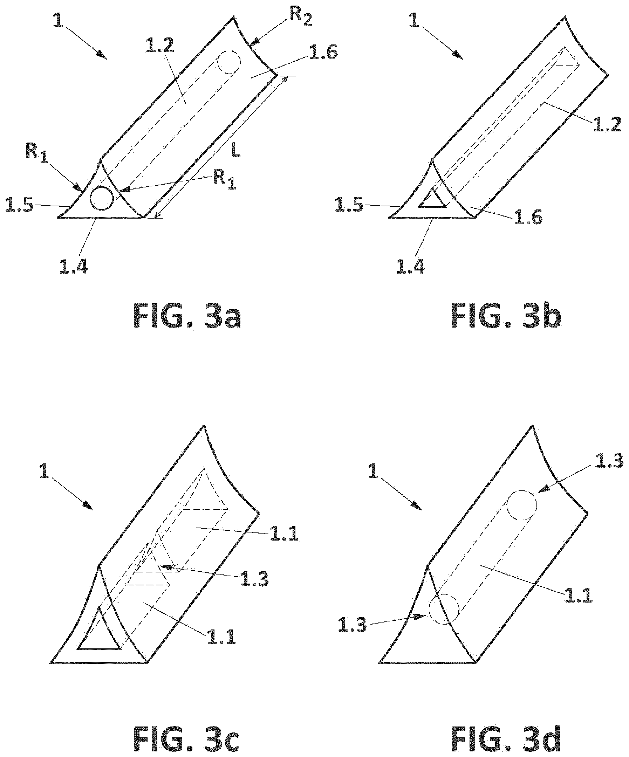

Likewise, these internal hollow space(s) (1.1, 1.2) may have different cross-sectional shape. Figures 3a to 3d depicts exemplary embodiments of a printed filler with different hollow spaces (1.1, 1.2).

Figure 3a depicts a filler (1) with a single substantially circular hollow space (1.2) that extends along its entire length, i.e. with a circular through-hole in its interior. This embodiment is advantageous for housing cables or other tubular connecting elements as the shape assists in mitigating movement, vibration, etc.

Figure 3b depicts another exemplary embodiment of a filler (1) with an inner through-hole (1.2) having a cross-sectional shape homologous to the outer cross-sectional shape of the filler, being in this case a substantially triangular shape.

Figure 3c depicts another exemplary embodiment, similar to figure 3b but further having a wall (1.3) splitting the through-hole (1.2) into two opened (at one of their ends) hollow spaces (1.1) or cavities. Advantageously, the inner wall (1.3) strengthens the filler (1) to prevent over-deformation in case of the filler being very long.

It is to be noted that these intermediate walls (1.3) can be either complete or have an additional hole to allow cable to pass through (not shown in the figures). Thus, the thickness of the walls (1.4, 1.5, 1.6) that form the triangular shape can be adjusted having regard this intermediate reinforcements (1.3), and thus, less meltable material may be needed.

Further, the reinforcement of the filler (1) may be further adjusted based on the content of fibrous material reinforcement embedded within the meltable material.

In this way, simulations can be performed prior to design and, for instance, isogrid or anisogrid structures or reinforcement concepts may be obtained by topologic optimizations.

In addition, different shapes either for the outer shape or for the hollow space can be combined according to the actual structural needs.

Finally, in figure 3d it is depicted a further embodiment of a filler (1) which is not expected to house any cable. Therefore, its hollow space (1.1) (a single one in this example but could be split as explained) is blind at both ends in order to prevent dust and dirt to accumulate therein. As explained before, these walled ends (1.3) may be replaced by plugs or sealant. In addition, the walled ends, the plugs or the sealant may also let cables to pass through provided they have a further conditioned hole (not shown) which may be further sealed to prevent dust and dirt to come into.

In figures 4a and 4b, it is shown a filler in the form of a roving for an 'L-profile' stringer and a 'Z-profile' stringer, respectively. In these stringers depicted, the first laminates form the desired profiles, that is, the 'L-profile' or the 'Z-profile', whereas the second laminate is in both cases the base laminate for the skin of the aircraft. Accordingly, it is shown that both of these rovings have a substantially right triangular outer cross-sectional shape.

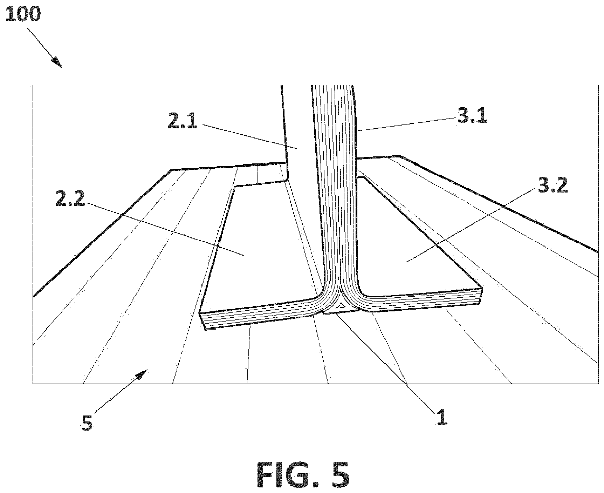

Figure 5 depicts a composite part (10), namely a T-profile stringer, with a printed roving (1) (i.e. a filler) both placed on a base laminate (5) to be co-cured together.

As it can be observed, the roving (1) is interposed filling a gap between the T-profile stringer (10) and the base laminate (5) thus providing a uniform and planar surface over the foot (2.2, 3.2) of the stringer to contact with the base laminate (5) which will form the skin of the aircraft. These T-profile composite parts or stringers are extensively used as stiffeners for adding rigidity and strength to such an adjacent load carrying panels or skin in aircrafts.

As mentioned, these T-profile composite parts (10) are conventionally formed by two identical halves (2, 3) in 'L-shape', which afterwards are joined together. Each halve is the mirror image of the other and are positioned in such a way that both rest on each other making their respective webs (2.1, 3.1) contact symmetrically.

The resulting T-profile composite part (10) is theoretically divided in a web (formed by respective webs of the 'L-shape' halves (2.1, 3.1)) and the two feet (2.2, 3.2), wherein each foot points in an opposite direction. Once installed, as per figure 5, the feet (2.2, 3.2) contact the skin or panel leaving the web (2.1, 3.1) projecting perpendicularly.

Although the T-profile stringer (10) is shown uncured in figure 5 as well as the base laminate (5) to further be subjected to a co-curing cycle, the T-profile stringer (10) might be already cured and be bonded to the base laminate (5) or even the base laminate be cured and the uncured T-profile be cured thereon.

As a result, at least a portion of an aircraft skin (100) is thereby manufactured.

## Claims

1. A filler (1) manufactured by using Additive Manufacturing technology and dimensionally adapted to occupy an elongated recess (4) or void formed by a first (2) and second (3) laminate each formed by at least one ply; and wherein the filler (1) comprises at least one hollow space (1.1, 1.2) throughout its longer length (L).

2. The filler (1) according to claim 1, wherein the filler is a roving, preferably for a T-profile composite part (10), the filler (1) having a substantially triangular outer cross-sectional shape.

3. The filler (1) according to claim 2, comprising three faces according to the triangular outer cross-sectional shape, wherein a first face (1.4) is substantially flat, and the other two faces (1.5, 1.6) have a substantially concave shape along the longer length (L).

4. The filler (1) according to claim 3, comprising a non-constant outer cross-sectional profile with a progression of radius of curvature (R₁, R₂) along the faces (1.5, 1.6) with the concave shape, the radius of curvature (R₂) at one end of the filler according to the longer length (L) being greater than the radius of curvature (R₁) at the opposite end, preferably the radius of curvature (R₁) at one end and the radius of curvature (R₂) at the opposite end being between 4 and 25 mm.

5. The filler (1) according to any of claims 1 to 4, wherein the at least one hollow space is an inner through-hole (1.2) comprising a cross-sectional shape homologous to the outer cross-sectional shape of the filler, or comprising a substantially circular cross-sectional shape.

6. The filler (1) according to any of claims 1 to 5, wherein the filler (1) comprises at least one wall (1.3) resulting at least one hollow space (1.1) in a blind hole.

7. The filler (1) according to any of claims 1 to 6, made of thermoplastic material, preferably nylon recycled from scrapped vacuum bags.

8. The filler (1) according to any of claims 1 to 7, further comprising fibrous material reinforcement, preferably recycled from scrapped dry fibre plies.

9. Method for manufacturing a composite part (10) by at least a first curable laminate (2) and a second curable laminate (3), wherein the method comprises the following steps:
- providing the first laminate (2) formed by at least one ply;
- providing the second laminate (3) formed by at least one ply;
- bringing at least such first (2) and second (3) laminates together forming an elongated recess (4) or an elongated void thereby;
- manufacturing by using Additive Manufacturing technology a filler (1) according to any of claims 1 to 8 dimensionally adapted to occupy such recess (4) or void; and
- placing such filler (1) before the first (2) and second (3) laminate are brought together for filling the resulting void, or after being brought together for filling the resulting recess (4) in such a way that the filler (1) supports such first (2) and second (3) laminates thus maintaining the original recess or void shape.

10. The method according to claim 9, wherein the filler (1) is manufactured using Fused Filament Fabrication technology.

11. The method according to any of claims 9 or 10, wherein the first (2) and second (3) laminates are provided in uncured state, and once the filler (1) is placed, the composite part (10) is subjected to a curing cycle for co-curing the at least first (2) and second (3) laminates together.

12. The method according to any of claims 9 or 10, wherein the method further comprises:
- curing separately the first (2) and second (3) laminates;
- adhesively bonding the first (2) and second (3) laminates to each other; and
- bonding the filler (1) to the first (2) and second (3) laminates by adhesive means.

13. The method according to any of claims 9 to 12, wherein the composite part is a T-profile composite part (10), such as an aeronautical stringer, and the first (2) and second (3) laminates have each a respective L-profile being thus positioned and put together making their respective webs (2.1, 3.1) contact symmetrically for achieving the desired T-profile; and wherein the filler (1) is placed along the recess (4) where both L-profiles (2, 3) divert from each other.

14. A T-profile composite part (10), such as an aeronautical stringer composite part manufactured according to the method of claim 13, wherein the filler (1) manufactured by using Additive Manufacturing technology is arranged occupying the recess (4) where both L-profiles (2, 3) divert from each other.

15. Method for manufacturing at least a portion of an aircraft skin (100) comprising at least one aeronautical stringer (10), the method comprising the following steps:
- providing a base laminate (5) for the skin;
- manufacturing at least one aeronautical stringer (10) according to the method of claim 14;
- positioning the at least one aeronautical stringer (10) on the base laminate (5); and
∘ if both the base laminate (5) and the at least one aeronautical stringer (10) are uncured, applying a curing cycle for curing them together; or
∘ if the base laminate (5) is cured or pre-cured and the at least one aeronautical stringer (10) is uncured, adhesively bonding the base laminate (5) to the uncured aeronautical stringer (10) and applying a curing cycle; or
∘ if both the base laminate (5) and the at least one aeronautical stringer (10) are cured or pre-cured, bonding the cured base laminate (5) with the cured aeronautical stringer (10) by adhesive means.
